# EUROPEAN PATENT SPECIFICATION

(11) **EP 1 101 645 B1**
(45) Date of publication and mention of the grant of the patent: **17.12.2003**
(21) Application number: 01102769.5
(22) Date of filing: 13.01.1998
(51) Int. Cl.: B60K 7/00, B60K 17/22, B60K 17/04

(54) **Low floor drive unit assembly for an electrically driven vehicle**
Antriebseinheit für ein elektrisch angetriebenes Niederflurfahrzeug
Ensemble d'unité de transmission à faible garde au sol pour véhicule électrique

(30) Priority: 18.02.1997 US 801531; 18.02.1997 US 801532; 18.02.1997 US 801536
(43) Date of publication of application: 23.05.2001
(62) Divisional of application: 98902488.0
(73) Proprietor: Meritor Heavy Vehicle Systems, LLC, Troy, MI 48084 (US)
(72) Inventor: Ruppert, Malcolm F. Jr., Hebron, OH 43025 (US); Arnold, Bradley A., Granville, Oh 43023 (US)
(74) Representative: Sties, Jochen, Dipl.-Ing.

(56) References cited:
- DE-A- 4 217 260
- GB-A- 502 313
- US-A- 1 540 526
- US-A- 2 462 574
- US-A- 2 589 863

## Description

### BACKGROUND OF THE INVENTION

This invention relates to a unique drive arrangement for electrically driving the wheels of a vehicle in such a way that the floor of the vehicle may be lower than was the case in the prior art.

Mass transit vehicles, such as a bus or trolley car, typically have seats aligned at the lateral sides of the vehicle, with a central aisle extending along the vehicle. The seats are typically at a higher vertical location than the aisle, and thus cover the wheels. It would be desirable to have the aisle positioned relatively low to the ground. This would provide increased passenger space within the body of the vehicle, and may allow the designer to reduce the overall height of the mass transit vehicle. Other advantages to having a lower floor position include improved handicapped access and greater ease in the loading and unloading of passengers.

Mass transit vehicles typically have several axles which support and drive or steer the vehicle. If the axle is a driving axle, then electric motors can be used to generate torque to drive the wheels. In a typical configuration, a centrally located electric motor drives two opposed wheels at the sides of the vehicle by way of a conventional axle. Usually, transmissions or drive shafts extend from the central motor to the axle.

In the prior art, there are relatively large motor, transmission, or axle elements directly below the center of the vehicle. The aisle is typically in the center of the vehicle and normally goes over the axle, thus requiring the floor of the aisle to be relatively high. One known bus moves the floor up by steps over the axle. It is undesirable, however, to have passengers climb steps to reach the aisle and seating areas.

An example of a prior art drive as mentioned above can be found in US-A-4,270,622.

GB-A-502,313, which is considered as the most relevant prior art and forms the basis for the preamble of claims 1 and 12, discloses an electrically driven vehicle having independently suspended and separately driven wheels, each carried by a pivoted arm formed by the casing of the motor and transmission gear driving the wheel. A spring is interposed between the frame and the arm. The arm is pivotally suspended from a transverse member projecting laterally from a longitudinally frame. The motor shaft and transmission gear is below the level of the wheel axle.

The subject invention relates to an automotive vehicle suspension drive unit assembly according to claims 1 and 12 and to a method of assembling a drive transmission according to claim 18.

This invention improves packaging and increases passenger compartment size by moving the electric motors to the sides of the vehicle. This allows the interior vehicle floor to be lowered between the motors resulting in improved utilization of the passenger compartment. Also, the flexibility of mounting the electric motors at various angles with respect to the axis of rotation of the first and second driving axles results in flexible packaging designs for other vehicle components. Also, by mounting the electric motors to existing structures on the axle, a weight savings occurs because additional brackets and mounting supports are not required. Finally, by mounting the bevel gear and motor on opposing sides of the axis of rotation, the longitudinal distance through which the motor and its associated gearing extends is minimized so that the floor must only extend upwardly to surround the wheel and the motor for a minimal longitudinal distance.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 is a cross sectional view of a vehicle incorporating the subject invention;
Figure 2A is a cross sectional view taken along line 2-2 of Figure 1, showing a first electric motor arrangement;
Figure 2B is a view like Figure 2A, but showing an alternative electric motor arrangement;
Figure 3 is a fragmentary view from the inside of the left wheel hub as shown in Figure 2, partially broken away and in cross section, and showing a first embodiment of an electric motor arrangement;
Figure 4 is a cross section view from the front of the left wheel as shown in Figure 3, and showing the first embodiment of an electric motor mounting arrangement;
Figure 5 is a view like Figure 3 but showing an alternative electric motor mounting arrangement;
Figure 6 is a view like Figure 4 but showing the alternative electric motor mounting arrangement;
Figure 7 is a view like Figure 3 but showing an additional electric motor;
Figure 8 is a cross sectional view of a gear box showing an alternative embodiment incorporating a planetary gear set;
Figure 9 is similar to Figure 2A but shows the method of mounting the electric motors to suspension beams;
Figure 10A is a fragmentary view from the inside of the left wheel hub as shown in Figure 9, partially broken away and in cross section, and showing a first embodiment of a flexible coupling;
Figure 10B is a cross-sectional view through the coupling of Figure 10A;
Figure 11 is a view similar to Figure 10A but showing an alternative flexible coupling;
Figure 12 shows an alternative coupling; and
Figure 13 shows details of the mounting of the coupling shown in Figure 12.

### DETAILED DESCRIPTION OF a PREFERRED EMBODIMENT

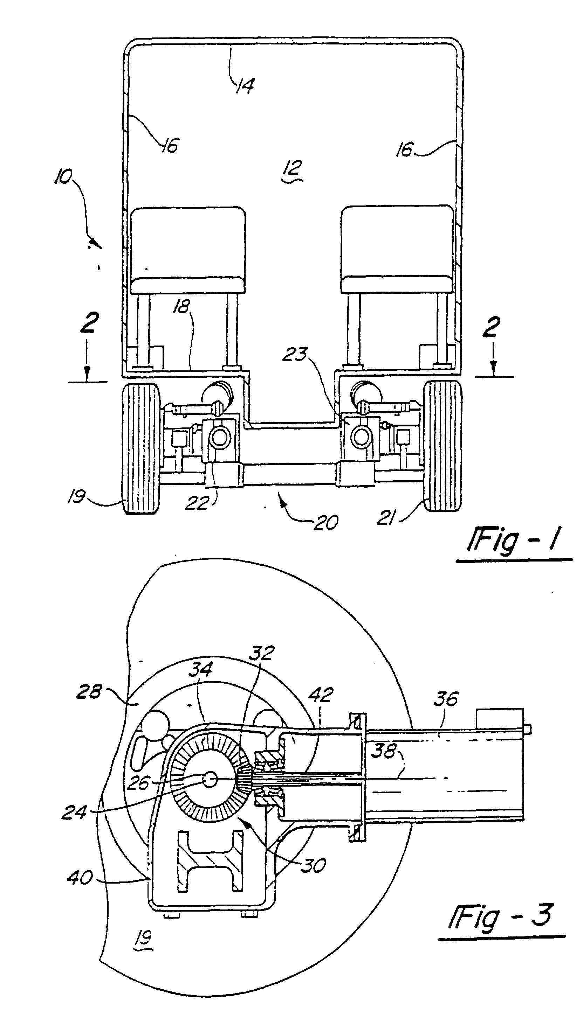

Referring to the Figures, wherein like numerals indicate like or corresponding parts throughout the several views, an automotive vehicle is shown generally at 10. As shown in Figure 1, automotive vehicle 10 includes a passenger compartment 12 defined by a roof 14, two side walls 16, and a vehicle floor 18. A pair of wheels 19, 21 are driven by an automotive vehicle drive unit assembly, generally shown at 20, which has a first unit 22 and a second unit 23., It should be understood that vehicle 10 is typically provided with a pair of drive units and several pairs of wheels.

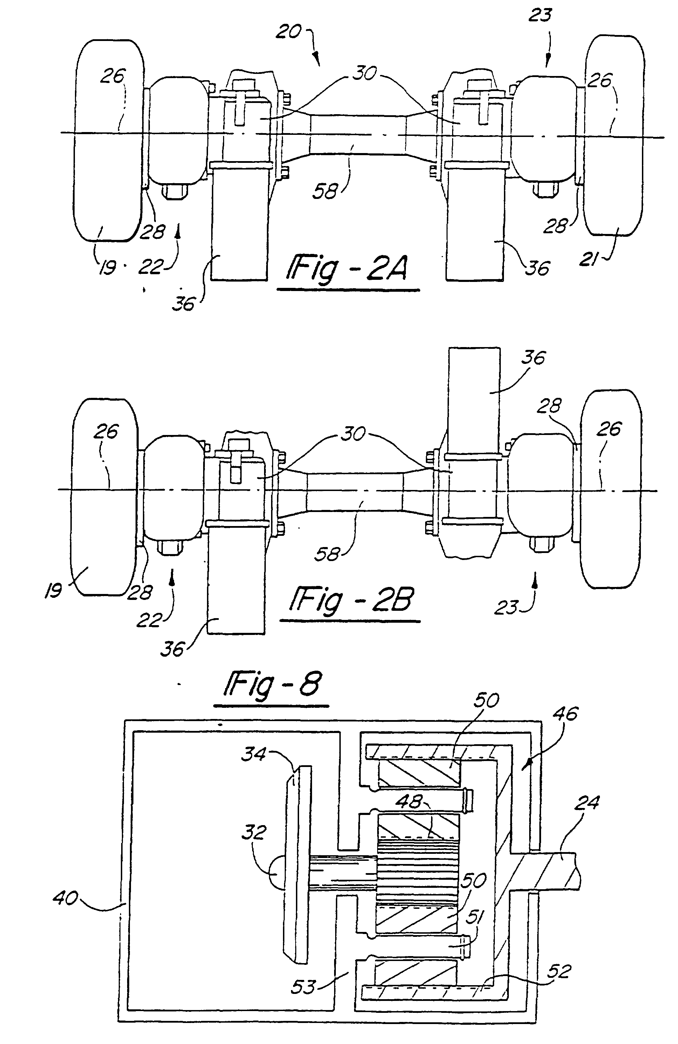

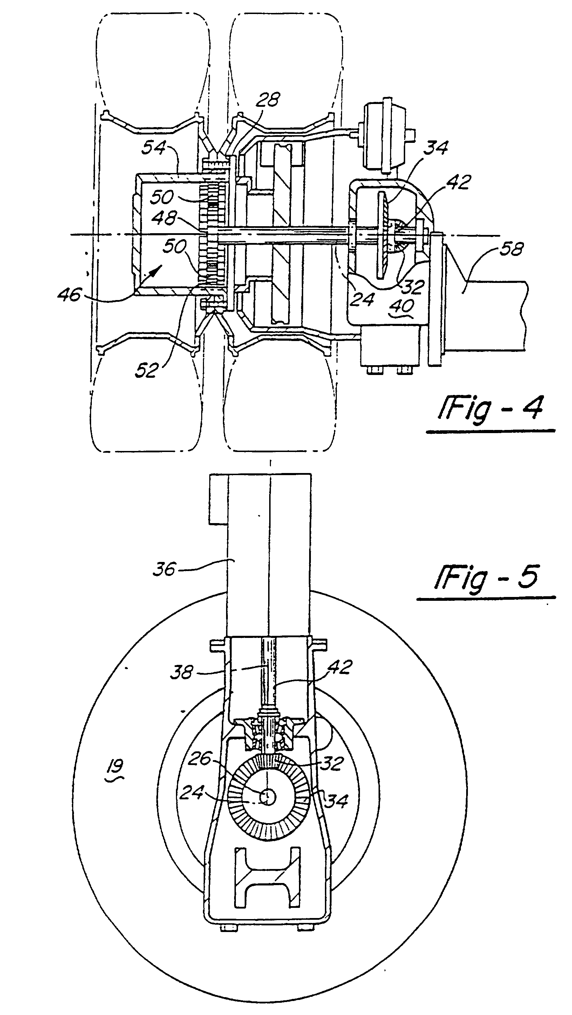

As shown in Figure 2A, the first 22 and second 23 units define an axis of rotation 26. A first driving axle shaft 24, shown in Figure 3, drives a first wheel hub 28 which revolves about the axis 26 of rotation for the first driving axle shaft 24.

A first gear set 30, located adjacent to the first wheel 19, is comprised of a pinion gear 32 and a ring gear 34 which together drive the first wheel hub 28. A first electric motor 36, defining a motor axis of rotation 38, is mounted at a non-parallel angle relative to the axis of rotation 26 of the first driving axle shaft 24. The first electric motor 36 is shown mounted in a horizontal position such that the motor axis of rotation 38 is parallel to the vehicle floor 18 and is perpendicular to the axis of rotation 26 of the first driving axle shaft 24.

As shown in Figure 2A, drive unit assembly 20 further includes a second unit 23 comprising a second driving axle shaft 24, a second wheel hub 28, a second gear set 30, and a second electric motor 36. It is understood that the second unit 23 is a mirror image of the first unit 22. A beam 58 provides a fixed housing extending between the first 22 and second 23 units.

The first 36 and second 36 electric motors can be mounted in various different positions relative to each other. As shown in Figure 2A, the first 36 and second 36 electric motors can be mounted in a generally horizontal position with both electric motors 36 extending forwardly from the beam 58. Where packaging would allow, the electric motors 36 can also be mounted such that they both extend rearwardly from the beam 58. As shown in Figure 2B, the first 36 and second 36 electric motors can be mounted in a generally horizontal position with the first electric motor 36 extending in a forwardly direction relative to beam 58 while the second electric motor 36 extends in a rearwardly direction relative to beam 58. Arranging the configuration so that one electric motor 36 extends forwardly while the other electric motor 36 extends rearwardly can resolve electric motor weight balance issues that arise when both motors extend in the same direction from the beam 58.

As can be seen in Figure 3 and 4, a first gear box 40 houses the first gear set 30 and is rigidly connected to the first electric motor 36. A motor drive shaft 42 extends from the electric motor 36, along the motor axis of rotation 38, and drives the pinion gear 32. The pinion gear 32 meshes with the ring gear 34 which revolves about the axis 26 of the driving axle shaft 24. As the ring gear 34 rotates, it drives the driving axle shaft 24 which turns the wheel hub 28. As can be seen in Figure 4, gear box 40 is fixed to beam 58.

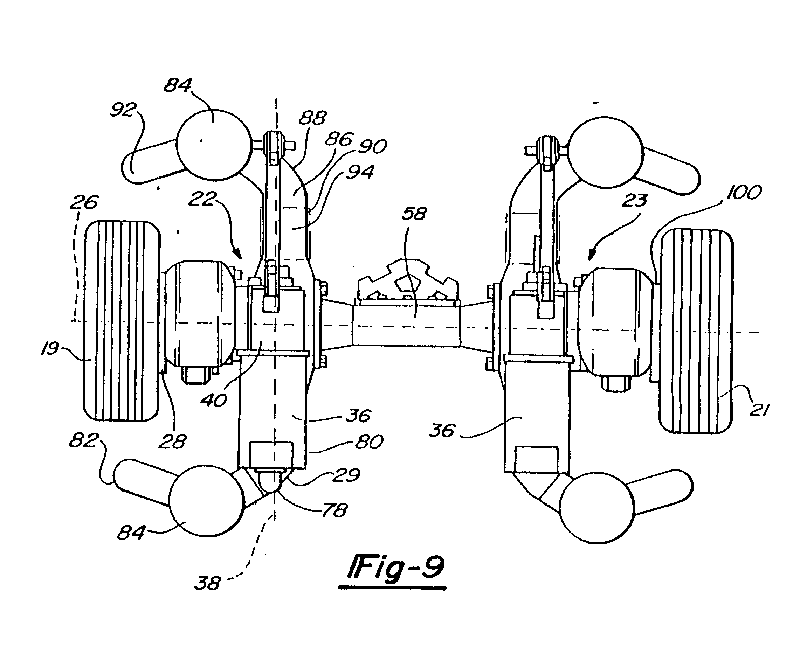

A planetary gear set, shown generally at 46 in Figure 4, can be used to achieve greater overall gear reduction. The planetary gear set 46 can either be located adjacent to the wheel hub 28 or can be incorporated into the gear box 40. The planetary gear set 46 shown in Figure 4 is located adjacent to the first wheel hub 28 and is driven by the first driving axle shaft 24. The planetary gear set 46 shown in Figure 8 is incorporated into the gear box 40. Regardless of its location, the planetary gear set 46 includes a sun gear 48, planet gears 50, and a ring gear hub 52. Each planet gear 50 is attached to a single planetary spider 53 by a corresponding planet pin 51, thus forming a planet gear assembly, as shown in the enlarged view of the planetary gear set 46 in Figure 8. The planet gear assembly is inserted into the ring gear hub 52 such that the teeth of the planet gears 50 mesh with the teeth of the ring gear hub 52.

In a typical configuration there are three planet gears 50 in a planet gear assembly but it is understood that a different number of planet gears 50 can be used. When the planetary gear set 46 is located adjacent to the wheel hub 28, as shown in Figure 4, the sun gear 48 is attached to and driven by the first driving axle shaft 24. As the sun gear 48 rotates, it meshes simultaneously with each of the planet gears 50 in the planet gear assembly. The planet gears 50 mesh with the ring gear hub 52 which results in the turning of the first wheel hub 28. In Figure 4, the entire planetary gear set 46 is shown housed within a planetary hub 54 located adjacent to the first wheel hub 28. It is understood that the drive unit assembly 20 does not require a planetary gear set 46 for operation. The planetary gear set 46 is an optional feature of the drive unit assembly 20.

As shown in Figure 8, the planetary gear set 46 can also be incorporated into the gear box 40 instead of being located adjacent to the wheel hub 28. Incorporating the planetary gear set 46 into the gear box 40 is a unique location for the planetary gear set 46. Typically, this location has been used by a differential which includes a ring gear and a pinion gear which drive axle shafts which in turn drive the wheels. With independent electric motors 36 there is no need for a differential or for any direct mechanical link between opposing wheels. By incorporating the planetary gear set 46 into the gear box 40, the need for a planetary hub 54 is eliminated which decreases the vehicle weight, gives a broader selection of wheel equipment and wheel end features, and reduces overall cost.

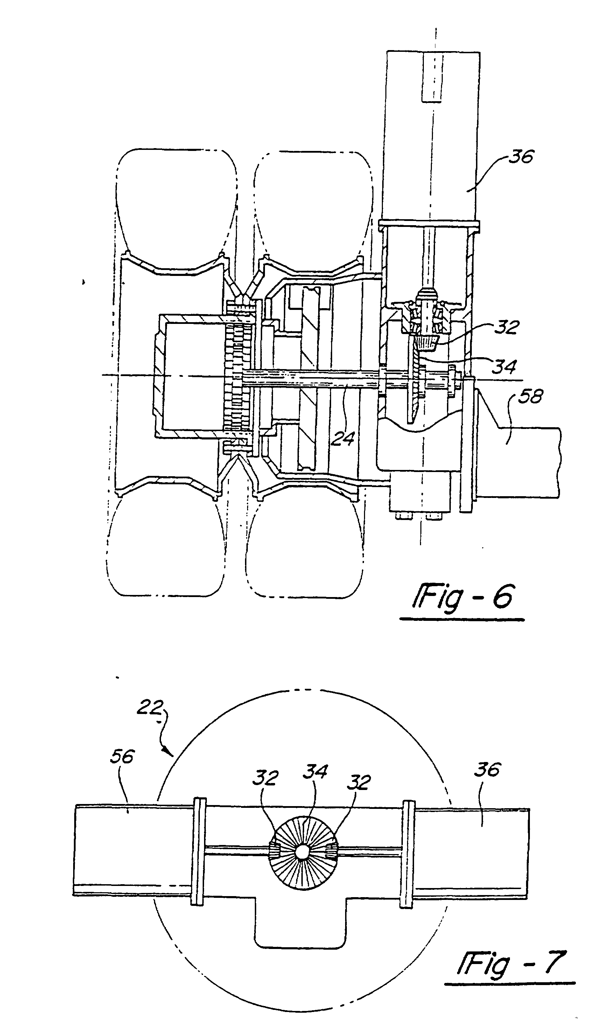

Figure 5 and 6 show an alternate embodiment of the mounting arrangement for the first electric motor 36. The first electric motor 36 is shown mounted in a vertical position such that the motor axis of rotation 38 is perpendicular to the vehicle floor 18 and is perpendicular to the axis of rotation 26 of the first driving axle shaft 24. In a typical configuration, the first electric motor 36 is mounted either in a horizontal or vertical position. However, the electric motor 36 can be mounted at any angle with respect to the vehicle floor 18 and the axis of rotation 26 of the first driving axle shaft 24.

Figure 7 shows an alternate embodiment of the drive unit assembly 20 in which the first unit 22 includes a third electric motor 56, in parallel driving relationship with the first electric motor 36. The third electric motor 56 is also used to drive the first gear set 30. The second unit 23 is a mirror image of the first unit 22 and includes a fourth electric motor 56, in parallel driving relationship with the second electric motor 36. The fourth electric motor 56 is use to drive the second gear set 30. The use of a third 56 and fourth electric motor 56, where packaging space is available, allows smaller gears and motors to be used, thus reducing the necessary size for the system.

With the present invention, the benefits as shown in particular in Figure 1 are achieved. By mounting the motors at the sides of the vehicle, the center of the vehicle floor may be lowered significantly than compared to the prior art. In addition, since the motors themselves are connected to drive the wheels to a non-parallel angle, they do not extend towards the center of the vehicle from the wheel for any undue amount. Thus, the lower floor can begin at a laterally outer position. If the motors extended on an axis parallel to the axis of the wheel, the motor would require a higher floor for more of the lateral width of the vehicle.

A preferred method of mounting the motors 36 to the vehicle is shown in Figure 9. The first 22 and second 23 vehicle suspension drive unit assemblies drive the wheels 19, 21 about the axis of rotation 26. As shown in Figure 10A, axis 26 is parallel to driving axle shaft 24 for the wheel 19 and extends through the center of the driving axle shaft 24 . The driving axle shaft 24 drives a first wheel hub 28 which revolves about the axis 26 of the driving axle shaft 24.

A first suspension beam 29 extends transversely to the axis 26 of the driving axle shaft 24 and adjacent to the first wheel hub 28. As is known, suspension beams are utilized to interconnect a fixed wheel axle housing and brake assembly to suspension elements such as air springs. The first suspension beam 29 supports the electric motor 36 which generates the torque to drive the driving axle shaft 24. As shown in Figure 9, electric motor 36 defines the motor axis of rotation 38 which is transverse to the axis of rotation 26 of the driving axle shaft 24.

A gear box or gear housing 40 interconnects the electric motor 36 and the driving axle shaft 24 and includes a pinion gear 32 and ring gear 34, shown in Figure 10A. The motor drive shaft 42 extends from the electric motor 36, along the axis 38 defined by the electric motor 36, and is coupled to a coaxial pinion shaft 44 which drives the pinion gear 32. The pinion gear 32 meshes with the ring gear 34 which revolves about the axis 26 of the driving axle shaft 24. As the ring gear 34 rotates, it drives the driving axle shaft 24 which turns the wheel hub 28.

The motor drive shaft 42 is connected to pinion shaft 44 by a flexible coupling. As the vehicle 10 receives road load input, the suspension beam 29 will move and flex. The flexible coupling can include a flexible tube portion 45 made of known materials.

As shown in Figure 10A, the flexible coupling can also be a spherical joint 102. The spherical joint 102 comprises a inner portion 55 and an outer portion 57. The inner portion 55 has an inner flange 59 and the outer portion 57 has an outer flange 60. The inner flange 59 is joined to a gear box flange 62 and the outer flange 60 is joined to an electric motor flange 64. The inner portion 55 of the spherical joint 102 has a concave surface 66 which rotatably mates with a convex surface 68 of the outer portion 57. Therefore, the electric motor 36, attached to the outer portion 57 of the spherical joint 102, can pivot with respect to the gear box 40 which is attached to the inner portion 55 of the spherical joint 102. The center of the spherical joint 102 coincides with the center of the flexible coupling.

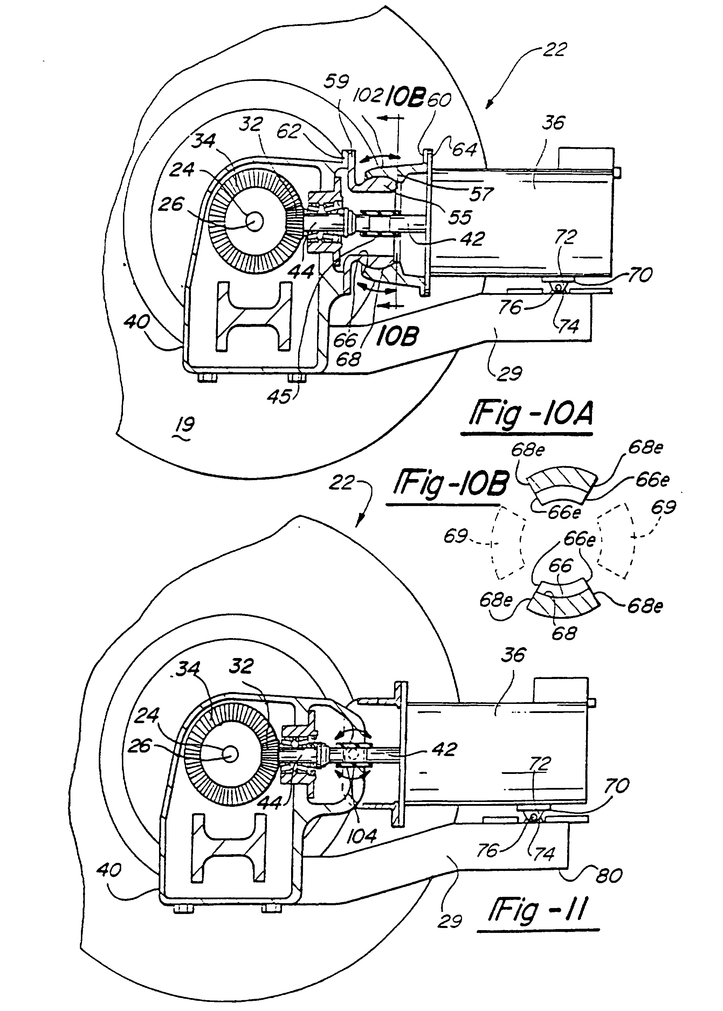

As shown in Figure 10B, the inner portion 55 and outer portion 57 of the spherical joint 102 do not extend about 360 degrees about a central axis. Instead, edges such as shown at 66E and 68E are cutoff from each of the members. In this way. the members may be easily assembled. When the inner portion 55 is moved into the outer portion 57, the outer portion 57 is moved to the position shown in phantom at 69. The outer portion is then turned to reach the assembled position such as shown in Figure 10A.

The flexible coupling could alternatively be a universal joint or Oldham joint 104, as shown in Figure 4 as a black box to simplify the overall figure. It should be understood, that known universal joint couplings including two yokes that are driven for rotation with each other, but which may pivot relative to each other about three axes, would be preferably utilized in this embodiment.

For both embodiments, a moveable connection 70 interconnects the electric motor 36 and the first suspension beam 29 at a position spaced apart from the flexible coupling which interconnects the motor drive shaft 42 and the pinion shaft 44. Connection 70 can also be of various forms. A preferred connection 70 includes an electric motor mount 72 and a suspension beam mount 74 that are pivotally connected by a pivot pin 76. As the first suspension beam 29 moves up and down in response to road load input, the axis 38 of the electric motor 36 pivots relative to the first suspension beam 29.

As shown in Figures 9 and 10A, suspension beam 29 forms a C-shaped extension 78 which has a first end 80 and a second end 82. The suspension beam mount 74 that interconnects with the motor mount 72 to form the connection 70 is mounted adjacent end 80 and near the C-shaped extension 78. A second suspension beam 86 extending in the opposite direction from the first suspension beam 29 also forms a C-shaped extension 88 with a first end 90 and a second end 92. A counterweight 94 is disposed near the first end 90 of the second suspension beam 86. The counterweight 94 compensates for weight imbalance resulting from the electric motor 36 being supported by the first suspension beam 29 in a location extending to one side of the axis 26 of the driving axle shaft 24. Without a counterweight 94, the weight imbalance could become evident when vehicle 10 experiences vertical accelerations due to road bumps, rail road tracks, etc. The counterweight 94 can be focused or spread over the length of the second suspension beam 86, and can be cast in place, added later by attaching a weight, or by pouring molten lead into a cavity (not shown) in the second suspension beam 86. Located near the second ends 82, 92 of the C-shaped extensions 78, 88 are circular pads 84 for mounting resilient suspension means (not shown) between the vehicle 10 and the first 29 and second 86 suspension beams. Typically air springs are mounted on pads 84.

The second suspension drive unit assembly, generally shown at 23, consisting of the same or similar components as the first suspension drive unit assembly 22 is interconnected to the first suspension drive unit assembly 22 by the support beam 58. The second suspension drive unit assembly 23 drives a second wheel hub 100, located opposite of the first wheel hub 28 but which also revolves about the axis 26 of the driving axle shaft 24. Packaging advantages exist if the electric motors 36 of the first 22 and second 23 suspension drive unit assemblies extend in the same direction from the support beam 58.

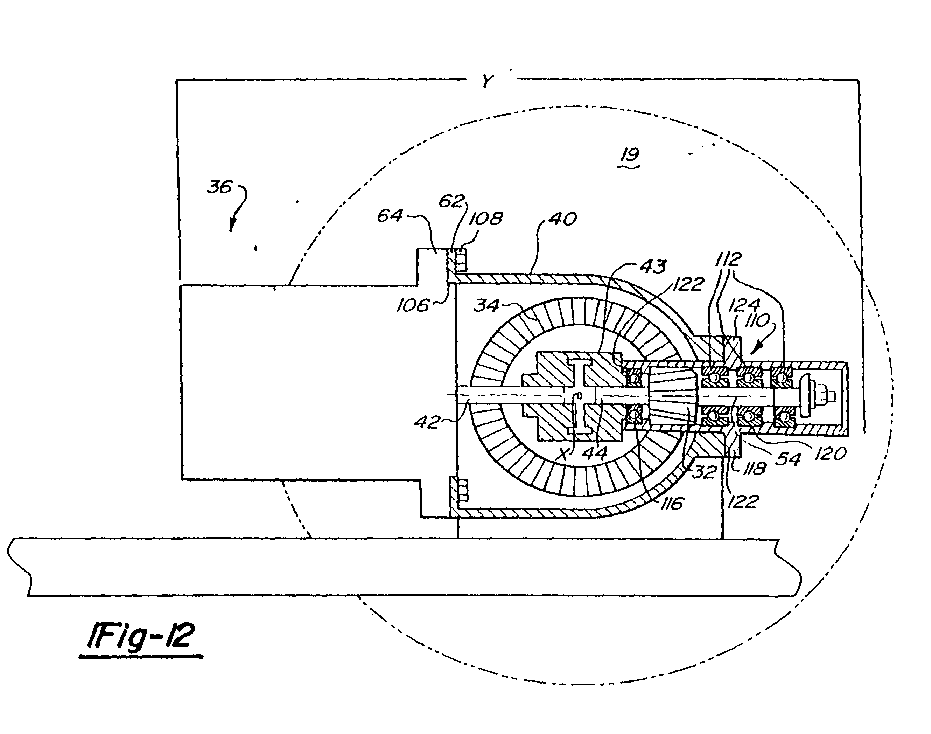

Another mounting method is shown in Figure 12. The motor 36 for driving wheel 19 is connected to the gear box or housing 40. The gear housing 40 may be a portion of the axle housing for the wheel 19. The ring gear or bevel gear 34 is shown for driving wheel 19. Ring gear 34 is preferably associated with appropriate gearing to drive wheel 19.

As shown, the gear housing 40 includes an open end 106. Open end 106 is closed by the attachment of motor 36. As shown, bolts 108 attach the gear housing flange 62 to the electric motor flange 64. Also, the drive pinion gear 32 engages and drives the ring gear 34. The pinion shaft 44 for the pinion gear 32 receives drive rotation from the motor output shaft 42. The shafts 42, 44 are interconnected by a flexible coupling 43.

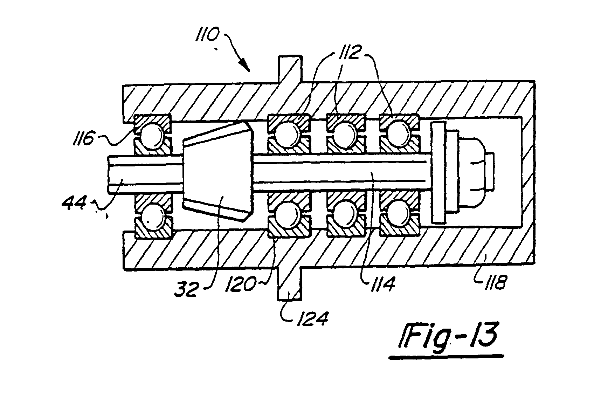

As shown, the gear housing 40 incorporates an opposed mounting portion 110 at a side of a central drive axis X of rotation opposed from the mounting of the motor 36. As shown in greater detail in Figure 13, the mounting portion 110 includes a first bearing assembly 112 which mounts a shaft portion 114 for the pinion gear 32 and a second bearing assembly 116 which mounts the pinion shaft 44 for the pinion gear 32. It should be understood that the first 112 and second 116 bearing assemblies include at least one bearing, but a greater number of bearings can also be used. As shown in Figures 12 and 13, the first bearing assembly 112 includes three angular contact bearings and the second bearing assembly 116 includes a single bearing. It is necessary for pinion gear 32 to be adequately supported on bearings such that it is able to transmit sufficient torque to rotate wheel 19.

In this embodiment, the positioning of bearings on an opposed side of the axis X from motor 36 results in a smaller overall envelope required for the entire system shown in Figure 12. As shown, the bearings 112 are mounted in a bearing housing 118 having bearing support portions 120. Bearing housing 118 encloses an open end 122 of gear housing 40.

In order to assemble the opposed mounting portion 110 into the gear housing 40, the bearing housing 118 is inserted into the open end 122 of gear housing 40 such that the pinion gear 32 teeth and the ring gear 34 teeth do not mesh. After initial positioning of the opposed mounting portion 110, the bearing housing 118 is moved horizontally such that a flange portion 124 of the bearing housing 118 encloses the open end 122 of the gear housing 40 resulting in the meshing of pinion gear 32 teeth with ring gear 34 teeth.

With this embodiment, the electric motor 36 is mounted on one side of the gear housing 40, and drives the pinion gear 32, which is mounted on one side of the axis X. The positioning of the bearings 112 on the opposed side of the axis X from the motor 36 results in an envelope Y which does not extend far beyond the size required for wheel 19. The floor 18 of the vehicle 10 must rise to accommodate wheel 19, and must also extend longitudinally slightly forwardly and rearwardly from the wheel 19. Thus, by the positioning of a good deal of the bearings, etc., for the gears and motors 36 withing the longitudinal envelope of the wheel 19, this embodiment does not require the floor 8 to move upwardly to cover the motor 36 and gearing by any significant longitudinal amount.

It should also be understood that s similar coupling is mounted at the opposed lateral side of the vehicle 10 and would drive its own wheel 21.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that wherein reference numerals are merely for convenience and are not to be in any way limiting, the invention may be practiced otherwise than as specifically described provided that this falls within the scope of the appended claims.

## Claims

1. An automotive vehicle suspension drive unit assembly (22) comprising:
a driving axle shaft (24) defining an axis of rotation (26);
a wheel hub (28) driven about said axis (26);
an electric motor (36) for driving said driving axle shaft (24);
a first suspension beam (29) extending transversely to said axis (26) and adjacent to said wheel hub (28), said beam (29) extending underneath said electric motor (36) for providing support for said electric motor (36);
**characterized by** a movable connection (70) located underneath said electric motor (36) for interconnecting said electric motor (36) and said suspension beam (29) for allowing rotational movement between said electric motor (36) and said suspension beam (29).

2. An assembly as set forth in claim 1 wherein said electric motor (36) defines a motor axis of rotation (38) that is transverse to said axis of rotation (26) of said driving axle shaft (24).

3. An assembly as set forth in claim 2 including a gear box (40) interconnecting said electric motor (36) and said driving axle shaft (24).

4. An assembly as set forth in claim 3 including a flexible coupling interconnecting said electric motor (36) and said gear box (40) for allowing said motor axis of rotation (38) to pivot relative to said gear box (40).

5. An assembly as set forth in claim 4 wherein said connection (70) includes a pivot pin (76) for allowing said motor axis of rotation (38) to pivot relative to said suspension beam (29).

6. An assembly as set forth in claim 4 wherein said flexible coupling includes a universal joint (104).

7. An assembly as set forth in claim 4 wherein said flexible coupling includes a tubular connection (45) between a driveshaft (42) from said motor (36) and an input shaft (44) for driving said gear box (40).

8. An assembly as set forth in claim 4 wherein said flexible coupling includes inner (55) and outer (57) housing members with one of said inner (55) and outer (57) housing members being associated with said electric motor (36) and the other of said inner (55) and outer (57) housing members being associated with said gear box (40), said inner housing member (55) having a first curved surface (66) and said outer housing member (57) having a second curved surface (68) for rotatably engaging said first curved surface (66).

9. An assembly as set forth in claim 8 wherein said first curved surface (66) is a convex surface having a first edge (66e) and said second curved surface (68) is a concave surface having a second edge (68e), said convex and concave surfaces being discontinuous around 360 degrees such that at least one of said convex or concave surfaces have spaces at said first (66e) or second (68e) edges.

10. An assembly as set forth in claim 1 including a second suspension beam (86) extending in the opposite direction from said first suspension beam (29) and a counter weight (94) disposed on said second suspension beam (86).

11. An assembly as set forth in claim 1 including a second suspension drive unit assembly (96) mounted at a laterally opposed location from the first suspension drive unit assembly (22) with a support beam (98) interconnecting the assemblies (22, 96).

12. A vehicle suspension drive unit assembly comprising:
a pair of laterally spaced wheels, each of said wheels being associated with a wheel hub (28) and a driving axle shaft (24), said driving axle shafts (24) being coaxial and defining an axis of rotation (26) about which said wheel hubs (28) rotate;
gear boxes (40) connected to each of said driving axle shafts (24);
suspension beams (29, 86) extending transversely to said axis (26) of said driving axle shaft (24) adjacent to each of said wheels and having a first end (80, 90) and a second end (82, 92);
electric motors (36) mounted on top of each of said suspension beams (29, 86) at said first end (80, 90) and being operatively connected to drive said wheel hubs (28);
**characterized by** a movable connection (70) located underneath each of said electric motors (36) for allowing relative movement between said electric motor (36) and said suspension beam (29);
further **characterized by** a counter weight (94) formed on each of said suspension beams (29, 86) at said second end (82, 92) for countering the additional weight added to said first ends (80, 90) by said electric motors (36);
and **characterized by** a flexible connection between said electric motors (36) and said wheel hubs (28) for allowing a motor axis of rotation (38) defined by said electric motors (36) to move relative to said respective gear box (40).

13. An assembly as set forth in claim 12 wherein said movable connection (70) includes a pivot pin (76) that provides pivotal support between said electric motors (36) and said suspension beams (29, 86).

14. An assembly as set forth in claim 12 wherein said flexible connection includes inner (55) and outer (57) housing members with one of said inner (55) and outer (57) housing members being associated with said electric motor (36) and the other of said inner (55) and outer (57) housing members being associated with said gear box (40), said inner housing member (55) having a first curved surface (66) and said outer housing member (56) having a second curved surface (68) for rotatably engaging said first curved surface (66).

15. An assembly as set forth in claim 14 wherein said first curved surface (66) is a convex surface having a first edge (66e) and said second curved surface (68) is a concave surface having a second edge (68e), said convex and concave surfaces being discontinuous around 360 degrees such that at least one of said convex or concave surfaces have spaces at said first (66e) or second (68e) edges.

16. An assembly as set forth in claim 12 wherein said flexible connection includes a universal joint (104).

17. An assembly as set forth in claim 12 wherein said flexible connection includes a tubular coupling (45).

18. A method of assembling a drive transmission including the steps of:
(a) providing a motor (36) having a first housing portion, a gear box (40) having a second housing portion with one of said first and second housing portions being mounted within the other, the first and second housing portions including an inner housing portion (55) and an outer (57) housing portion with the inner housing portion (55) having a curved surface (66) and the outer housing portion (57) having a mating curved surface (68) with at least one of the first and second housing members having the respective surface be discontinuous around 360 degrees such that there are spaces at edges (66e, 68e) of the surfaces;
(b) aligning the inner housing member (55) and the outer housing member (57) with the curved surfaces (66, 68) aligned with the spaces rather than with the curved surfaces; and
(c) turning one of the housing members (55, 57) relative to the other such that the curved surfaces (66, 68) move out of such spaces and into mating contact with the curved surface (66, 68)of the other of the housing members (55, 57);
(d) supporting the motor (36) on a suspension beam (29) with a movable connection (70) to allow relative movement between the electric motor (36) and the suspension beam (29).

19. A method as set forth in claim 18 including the step of forming the first curved surface (66) as a convex surface and forming the second curved surface (68) as a concave surface.

## Patentansprüche

1. Antriebseinheitsbaugruppe (22) für eine Kraftfahrzeugaufhängung, die folgendes umfaßt:
eine Antriebsachswelle (24), die eine Drehachse (26) definiert;
eine Radnabe (28), die um die Achse (26) herum angetrieben wird;
einen Elektromotor (36) zum Antrieb der Antriebsachswelle (24);
einen ersten Aufhängungsholm (29), der sich quer zu der Achse (26) und angrenzend an die Radnabe (28) erstreckt, wobei sich der Holm (29) unter dem Elektromotor (36) erstreckt, um den Elektromotor (36) abzustützen;
**gekennzeichnet durch** eine unter dem Elektromotor (36) befindliche bewegliche Verbindung (70) zum Verbinden des Elektromotors (36) mit dem Aufhängungsholm (29), um eine Drehbewegung zwischen dem Elektromotor (36) und dem Aufhängungsholm (29) zu erlauben.

2. Baugruppe nach Anspruch 1, wobei der Elektromotor (36) eine Motordrehachse (38) aufweist, die quer zur Drehachse (26) der Antriebsachswelle (24) verläuft.

3. Baugruppe. nach Anspruch 2 mit einem Getriebe (40), das den Elektromotor (36) mit der Antriebsachswelle (24) verbindet.

4. Baugruppe nach Anspruch 3 mit einer flexiblen Kupplung, die den Elektromotor (36) mit dem Getriebe (40) verbindet, damit sich die Motordrehachse (38) relativ zu dem Getriebe (40) drehen kann.

5. Baugruppe nach Anspruch 4, wobei die Verbindung (70) einen Drehzapfen (76) umfaßt, damit sich die Motordrehachse (38) relativ zu dem Aufhängungsholm (29) drehen kann.

6. Baugruppe nach Anspruch 4, wobei die flexible Kupplung ein Universalgelenk (104) umfaßt.

7. Baugruppe nach Anspruch 4, wobei die flexible Kupplung eine rohrförmige Verbindung (45) zwischen einer von dem Motor (36) ausgehenden Antriebswelle (42) und einer Eingangswelle (44) zum Antrieb des Getriebes (40) umfaßt.

8. Baugruppe nach Anspruch 4, wobei die flexible Kupplung innere (55) und äußere (57) Gehäuseelemente umfaßt, wobei eines von den inneren (55) und äußeren (57) Gehäuseelementen zu dem Elektromotor (36) gehört und das andere von den inneren (55) und äußeren (57) Gehäuseelementen zu dem Getriebe (40) gehört, wobei das innere Gehäuseelement (55) eine erste gekrümmte Fläche (66) aufweist und das äußere Gehäuseelement (57) eine zweite gekrümmte Fläche (68) aufweist, die drehbar an der ersten gekrümmten Fläche (66) angreift.

9. Baugruppe nach Anspruch 8, wobei die erste gekrümmte Fläche (66) eine konvexe Fläche mit einem ersten Rand (66e) ist und die zweite gekrümmte Fläche (68) eine konkave Fläche mit einem zweiten Rand (68e) ist, wobei die konvexe und die konkave Fläche über 360 Grad diskontinuierlich sind, so daß mindestens eine der konvexen oder konkaven Flächen am ersten Rand (66e) oder am zweiten Rand (68e) Zwischenräume aufweist.

10. Baugruppe nach Anspruch 1 mit einem zweiten Aufhängungsholm (86), der sich von dem ersten Aufhängungsholm (29) in die entgegengesetzte Richtung erstreckt, und mit einem an dem zweiten Aufhängungsholm (86) angeordneten Gegengewicht (94).

11. Baugruppe nach Anspruch 1 mit einer zweiten Aufhängungsantriebseinheitsbaugruppe (96), die an einer der ersten Aufhängungsantriebseinheitsbaugruppe (22) seitlich gegenüberliegenden Stelle angebracht ist, wobei ein Tragholm (98) die Baugruppen (22, 96) miteinander verbindet.

12. Antriebseinheitsbaugruppe für eine Fahrzeugaufhängung, die folgendes umfaßt:
zwei seitlich voneinander beabstandete Räder, wobei zu jedem Rad eine Radnabe (28) und eine Antriebsachswelle (24) gehört, wobei die Antriebsachswellen (24) koaxial sind und eine Drehachse (26) definieren, um die sich die Radnaben (28) drehen;
Getriebe (40), die mit jeder der Antriebsachswellen (24) verbunden sind;
Aufhängungsholme (29, 86), die sich angrenzend an jedes Rad quer zu der Achse (26) der Antriebsachswelle (24) erstrecken und ein erstes Ende (80, 90) und ein zweites Ende (82, 92) aufweisen;
Elektromotoren (36), die an dem ersten Ende (80, 90) oben auf jedem der Aufhängungsholme (29, 86) angebracht sind und funktionsmäßig verbunden sind, um die Radnaben (28) anzutreiben;
**gekennzeichnet durch** eine unter jedem der Elektromotoren (36) befindliche bewegliche Verbindung (70), die eine Relativbewegung zwischen dem Elektromotor (36) und dem Aufhängungsholm (29) erlaubt;
ferner **gekennzeichnet durch** ein Gegengewicht (94), das am zweiten Ende (82, 92) auf jedem der Aufhängungsholme (29, 86) ausgebildet ist, um dem **durch** die Elektromotoren (36) den ersten Enden (80, 90) hinzugefügten zusätzlichen Gewicht entgegenzuwirken;
und **gekennzeichnet durch** eine flexible Verbindung zwischen den Elektromotoren (36) und den Radnaben (28), damit sich eine **durch** die Elektromotoren (36) gebildete Motordrehachse (38) relativ zu dem jeweiligen Getriebe (40) bewegen kann.

13. Baugruppe nach Anspruch 12, wobei die bewegliche Verbindung (70) einen Drehzapfen (76) umfaßt, der ein Drehlager zwischen den Elektromotoren (36) und den Aufhängungsholmen (29, 86) bereitstellt.

14. Baugruppe nach Anspruch 12, wobei die flexible Verbindung innere (55) und äußere (57) Gehäuseelemente umfaßt, wobei eines von den inneren (55) und äußeren (57) Gehäuseelementen zu dem Elektromotor (36) gehört und das andere von den inneren (55) und äußeren (57) Gehäuseelementen zu dem Getriebe (40) gehört, wobei das innere Gehäuseelement (55) eine erste gekrümmte Fläche (66) aufweist und das äußere Gehäuseelement (56) eine zweite gekrümmte Fläche (68) aufweist, um an der ersten gekrümmten Fläche (66) drehbar anzugreifen.

15. Baugruppe nach Anspruch 14, wobei die erste gekrümmte Fläche (66) eine konvexe Fläche mit einem ersten Rand (66e) ist und die zweite gekrümmte Fläche (68) eine konkave Fläche mit einem zweiten Rand (68e) ist, wobei die konvexen und konkaven Flächen über 360 Grad diskontinuierlich sind, so daß mindestens eine von den konvexen oder konkaven Flächen am ersten Rand (66e) oder am zweiten Rand (68e) Zwischenräume aufweist.

16. Baugruppe nach Anspruch 12, wobei die flexible Verbindung ein Universalgelenk (104) umfaßt.

17. Baugruppe nach Anspruch 12, wobei die flexible Verbindung eine rohrförmige Kupplung (45) umfaßt.

18. Verfahren zum Zusammenbauen eines Antriebsgetriebes, das die folgenden Schritte umfaßt:
(a) es wird ein Motor (36) mit einem ersten Gehäuseabschnitt und ein Getriebe (40) mit einem zweiten Gehäuseabschnitt bereitgestellt, wobei einer von den ersten und zweiten Gehäuseabschnitten in dem anderen montiert ist, wobei die ersten und zweiten Gehäuseabschnitte einen inneren Gehäuseabschnitt (55) und einen äußeren Gehäuseabschnitt (57) umfassen, wobei der innere Gehäuseabschnitt (55) eine gekrümmte Fläche (66) aufweist und der äußere Gehäuseabschnitt (57) eine entsprechende gekrümmte Fläche (68) aufweist, wobei bei wenigstens einem von den ersten und zweiten Gehäuseelementen die jeweilige Fläche über 360 Grad diskontinuierlich ist, so daß es an den Rändern (66e, 68e) der Flächen Zwischenräume gibt;
(b) das innere Gehäuseelement (55) und das äußere Gehäuseelement (57) werden auf die gekrümmten Flächen (66, 68) ausgerichtet, die auf die Zwischenräume und nicht auf die gekrümmten Flächen ausgerichtet sind; und
(c) eines der Gehäuseelemente (55, 57) wird relativ zu dem anderen gedreht, so daß sich die gekrümmten Flächen (66, 68) aus diesen Zwischenräumen heraus und in Anlage an die gekrümmte Fläche (66, 68) des anderen der Gehäuseelemente (55, 57) bewegen; und
(d) der Motor (36) wird auf dem Aufhängungsholm (29) gelagert, wobei eine bewegliche Verbindung (70) eine Relativbewegung zwischen dem Elektromotor (36) und dem Aufhängungsholm (29) erlaubt.

19. Verfahren nach Anspruch 18 mit dem Schritt der Ausbildung der ersten gekrümmten Fläche (66) als konvexe Fläche und der Ausbildung der zweiten gekrümmten Fläche (68) als konkave Fläche.

## Revendications

1. Un ensemble (22) d'unité d'entraînement à suspension pour véhicule automobile, comprenant :
un arbre de roue (24) d'essieu moteur définissant un axe de rotation (26) ;
un moyeu de roue (28) entraîné autour dudit axe (26) ;
un moteur électrique (36) pour entraîner ledit arbre de roue (24) d'essieu moteur ;
une première poutre de suspension (29) s'étendant transversalement audit axe (26) et de façon adjacente audit moyeu de roue (28), ladite poutre (29) s'étendant au-dessous dudit moteur électrique (36) pour constituer un support audit moteur électrique (36) ;
**caractérisé par** une liaison mobile (70) placée au-dessous dudit moteur électrique (36) pour interconnecter ledit moteur électrique (36) et ladite poutre de suspension (29) pour permettre un mouvement de rotation entre ledit moteur électrique (36) et ladite poutre de suspension (29).

2. Un ensemble selon la revendication 1, dans lequel ledit moteur électrique (36) définit un axe de rotation de moteur (38) transversal audit axe de rotation (26) dudit arbre de roue (24) d'essieu moteur.

3. Un ensemble selon la revendication 2, comprenant un carter d'engrenage (40) interconnectant ledit moteur électrique (36) et ledit arbre de roue (24) d'essieu moteur.

4. Un ensemble selon la revendication 3, comprenant un accouplement flexible électrique interconnectant ledit moteur électrique (36) et ledit carter d'engrenage (40) pour permettre audit axe de rotation de moteur (38) de pivoter par rapport audit carter d'engrenage (40).

5. Un ensemble selon la revendication 4, dans lequel ladite liaison (70) comprend un axe de pivotement (76) pour permettre audit axe de rotation (38) de moteur de pivoter par rapport à ladite poutre de suspension (29).

6. Un ensemble selon la revendication 4, dans lequel ledit accouplement flexible comprend un joint universel (104).

7. Un ensemble selon la revendication 4, dans lequel ledit accouplement flexible comprend une connexion tubulaire (45) entre un arbre d'entraînement (42) venant dudit moteur (36) et un arbre d'entrée (44) pour entraîner ledit carter d'engrenage (40).

8. Un ensemble selon la revendication 4, dans lequel ledit accouplement flexible comprend des organes formant boîtier intérieur (55) et boîtier extérieur (57), l'un desdits organes formant boîtier intérieur (55) et boîtier extérieur (57) étant associé audit moteur électrique (36) et l'autre desdits organes formant boîtier intérieur (55) et boîtier extérieur (57) étant associé audit carter d'engrenage (40), ledit organe formant boîtier intérieur (55) ayant une première surface incurvée (66) et ledit organe formant boîtier extérieur (57) ayant une deuxième surface incurvée (68) pour venir en contact rotatif, avec ladite première surface incurvée (66).

9. Un ensemble selon la revendication 8, dans lequel ladite première surface incurvée (66) est une surface convexe ayant un premier bord (66e) et ladite deuxième surface incurvée (68) est une surface concave ayant un deuxième bord (68e), lesdites surfaces convexes et concaves étant discontinues sur 360 dégrés de manière qu'au moins l'une desdites surfaces convexes ou concaves ait des espaces sur lesdits premiers (66e) ou deuxièmes (68e) bords.

10. Un ensemble selon la revendication 1, comprenant une deuxième poutre de suspension (86) s'étendant dans la direction opposée à ladite première poutre de suspension (29) et un contrepoids (94) disposé sur ladite deuxième poutre de suspension (86).

11. Un ensemble selon la revendication 1, comprenant un deuxième ensemble (96) d'unité d'entraînement de suspension monté en un emplacement latéralement opposé vis-à-vis du premier ensemble (22) d'unité d'entraînement de suspension , avec une poutre support (98) interconnectant les ensembles (22,96).

12. Un ensemble d'unité d'entraînement à suspension pour véhicule comprenant :
une paire de roues espacées latéralement, chacune desdites roues étant associée à un moyeu de roue (28) et à un arbre de roue (24) d'essieu moteur, ledit arbre de roue (24) d'essieu moteur étant coaxiaux et définissant un axe de rotation (26) autour duquel tournent lesdits moyeux de roues (28) ;
des carters d'engrenage (40) reliés à chacun desdits arbres de roue (24) d'essieu moteur ;
des poutres de suspension (29,86) s'étendant transversalement audit axe (26) dudit arbre de roue (24) d'essieu moteur, de façon adjacente à chacune desdites roues et ayant une première extrémité (80,90) et une deuxième extrémité (82,92) ;
des moteurs électriques (36), montés en partie haute de chacune desdites poutres de suspension (29,86) à ladite première extrémité (80,90) et étant reliés fonctionnellement pour entraîner lesdits moyeux de roue (28) ;
**caractérisé par** une liaison mobile (70) placée sous chacun desdits moteurs électriques (36) pour permettre un déplacement relatif entre ledit moteur électrique (36) et ladite poutre de suspension (29) ;
**caractérisé en outre par** un contrepoids (94) formé sur chacune desdites poutres de suspension (29,86) à ladite deuxième extrémité (82,92) pour compenser le poids additionnel ajouté auxdites premières extrémités (80,90) par lesdits moteurs électriques (36) ;
et **caractérisé par** une liaison flexible entre lesdits moteurs électriques (36) et lesdits moyeux de roue (28) pour permettre à un axe de rotation (38) de moteur défini par lesdits moteurs électriques (36) de se déplacer par rapport audit carter d'engrenage (40) respectif.

13. Un ensemble selon la revendication 12, dans lequel ladite liaison mobile (70) comprend un axe de pivotement (76) qui assure un support pivotant entre lesdits moteurs électriques (36) et lesdites poutres de suspension (29,86).

14. Un ensemble selon la revendication 12, dans lequel ladite liaison flexible comprend des organes formant boîtier intérieur (55) et extérieur (57), l'un desdits organes formant carter intérieur (55) et extérieur (57) étant associé audit moteur électrique (36) et l'autre desdits organes formant boîtier intérieur (55) et extérieur (57) étant associé audit carter d'engrenage (40), ledit organe formant boîtier intérieur (55) ayant une première surface incurvée (66) et ledit organe formant boîtier extérieur (56) ayant une deuxième surface incurvée (68) pour venir en contact de façon rotative avec ladite première surface incurvée (66).

15. Un ensemble selon la revendication 14, dans lequel ladite première surface incurvée (66) est une surface convexe ayant un premier bord (66e) et une deuxième surface incurvée (68) est une surface concave ayant un deuxième bord (68e), lesdites surfaces convexe et concave étant discontinues sur 360 dégrés de manière qu'au moins l'une desdites surfaces convexe ou concave ait des espaces au niveau desdits premier (66e) ou deuxième (68e) bords.

16. Un ensemble selon la revendication 12, dans lequel ladite liaison flexible comprend un joint universel (104).

17. Un ensemble selon la revendication 12, dans lequel ladite liaison flexible comprend un accouplement tubulaire (45).

18. Un procédé d'assemblage d'une transmission d'entraînement, comprenant les étapes consistant à :
a) à prévoir un moteur (36) ayant une première partie de carter, un carter d'engrenage (40) ayant une première partie formant boîtier, l'une desdites première et deuxième parties formant boîtier étant montées à l'intérieur de l'autre, les premières et deuxièmes parties formant boîtier incluant une partie formant boîtier intérieur (55) et une partie formant boîtier extérieur (57), la partie formant boîtier intérieur (55) ayant une surface incurvée (66) et la partie formant boîtier extérieur (57) ayant une surface incurvée (68) adaptée ou conjuguée, au moins l'un des premier et deuxième organes formant boîtier ayant une surface respective discontinue sur 360 degrés de manière qu'il y ait des espaces sur des bords (66e,68e) des surfaces ;
b) à aligner l'organe formant boîtier intérieur (55) et l'organe formant boîtier extérieur (57) sur les surfaces incurvées (66,68), alignées avec les espaces plutôt qu'avec les surfaces incurvées ; et
c) à faire tourner l'un des organes formant boîtier (55,57) l'un par rapport à l'autre de manière que les surfaces incurvées (66,68) se déplacent hors de ces espaces et viennent en contact conjugué avec la surface incurvée (66,68) de l'autre des organes formant boîtier (55,57) ;
d) supporter le moteur (36) sur une poutre de suspension (29) avec une liaison (70) mobile pour permettre un déplacement relatif entre le moteur électrique (36) et la poutre de suspension (29).

19. Un procédé selon la revendication 18, comprenant l'étape consistant à former la première surface incurvée (66) sous forme d'une surface convexe et à former la deuxième surface incurvée (68) sous la forme de surface concave.
